# FASCICULE DE BREVET EUROPEEN

(11) **EP 3 239 786 B1**
(45) Date de publication et mention de la délivrance du brevet: **08.09.2021**
(21) Numéro de dépôt: 17168728.8
(22) Date de dépôt: 28.04.2017
(51) Int. Cl.: G04B 45/00, A63H 13/00

(54) **MECANISME D'ENTRAINEMENT D'UNE ANIMATION D'UN MOUVEMENT HORLOGER**
ANTRIEBSMECHANISMUS EINER ANIMATION EINES UHRWERKS
MECHANISM FOR DRIVING AN ANIMATION OF A CLOCK MOVEMENT

(30) Priorité: 28.04.2016 CH 5592016
(43) Date de publication de la demande: 01.11.2017
(73) Titulaire: Van Cleef&Arpels SA, 1752 Villars-sur-Glane (CH)
(72) Inventeur: STALDER, Nicolas, 74580 Viry (FR); MEIER, Willy, 2046 Fontaines (CH); MAGNIN-FEYSOT, Eric, 25500 Montlebon (FR); STRAUMANN, Kurt, 4512 Langendorf (CH)
(74) Mandataire: Micheli & Cie SA

(56) Documents cités:
- CH-A- 25 299
- CH-A1- 705 606
- CN-A- 101 524 208
- GB-A- 338 622
- US-A- 1 593 286

## Description

La présente invention concerne une pièce d'horlogerie comprenant une animation et un mécanisme d'entraînement de ladite animation.

Un mécanisme d'entraînement d'une animation d'un mouvement pour pièce d'horlogerie est décrit dans le document WO2014019819. Ce mécanisme comprend un personnage tridimensionnel au-dessus du cadran et au moins un axe s'étendant au-dessus du cadran dans une direction perpendiculaire au cadran, agencé de manière à déplacer au moins une partie dudit personnage tridimensionnel dans un plan non parallèle au cadran. Cependant, l'axe perpendiculaire utilisé dans ce mécanisme gâche l'esthétique de l'animation et le personnage subit des accélérations importantes.

La demande de brevet suisse CH 705 606 A1 décrit une pièce d'horlogerie à animation comprenant une came dentée coopérant avec un palpeur d'une première bascule, cette bascule étant solidaire d'un premier élément mobile en forme de demi-cœur qui est donc entraîné en mouvement lors de la rotation de la came dentée. Une seconde bascule est entraînée par la première bascule et est solidaire d'un second élément mobile en forme de demi-cœur de sorte que les mouvements des deux éléments mobiles donnent l'illusion d'un cœur qui bat. Cependant, l'amplitude des mouvements des premier et second éléments mobiles est très limitée. De plus, les éléments mobiles formant l'animation se déplacent par à-coups et subissent des accélérations et décélérations abruptes et importantes. En outre, le mécanisme d'animation de ce document ne permet pas d'entraîner les éléments mobiles pour qu'ils se déplacent dans un plan non parallèle au cadran.

Le brevet CH 25 299 décrit quant à lui une montre comprenant une animation de type à automate dans laquelle la force nécessaire pour produire le mouvement de l'automate est prise sur le pivot de la fourchette d'échappement. Il en résulte, comme dans la pièce d'horlogerie décrite dans la demande CH 705 606, des mouvements saccadés de l'animation. De plus, cela a un effet négatif sur la chronométrie du mécanisme d'horlogerie.

La présente invention vise à remédier au moins en partie aux problèmes susmentionnés et propose à ces fins une pièce d'horlogerie comprenant :
- un mouvement horloger comportant une animation comprenant une partie mobile,
- un moteur dudit mouvement horloger, et
- un mécanisme de transformation d'un mouvement rotatif unidirectionnel en un mouvement alterné pour l'entraînement de ladite partie mobile,
dans laquelle ledit mécanisme comporte une manivelle pivotée sur une partie fixe du mécanisme et entraînée en rotation unidirectionnelle par le moteur du mouvement horloger, ladite manivelle entraînant une première extrémité d'une bielle, la seconde extrémité de cette bielle entraînant la partie mobile de l'animation.

Dans le cadre de la présente invention, ladite manivelle comprend un pignon entraîneur et une goupille, ledit pignon entraîneur étant pivoté sur une partie fixe du mécanisme, entraîné en rotation unidirectionnelle par ledit moteur du mouvement horloger et portant ladite goupille autour de laquelle pivote une première extrémité de la bielle, ladite goupille étant excentrée par rapport à l'axe de rotation dudit pignon entraîneur et parallèle à cet axe.

Le mouvement alterné selon l'invention est par exemple un mouvement de translation dans un plan.

Il peut également s'agir d'un mouvement angulaire, de préférence d'un mouvement angulaire autour d'un arbre, cet arbre étant typiquement solidaire d'une partie fixe du mécanisme. Dans ce cas, la seconde extrémité de la bielle est avantageusement articulée sur un bras solidaire d'un moyeu pivoté sur ledit arbre par une articulation, le moyeu étant apte à porter une partie mobile de l'animation.

Dans le cas d'un mouvement alterné angulaire, le fait que le mouvement s'effectue autour d'un arbre solidaire d'une partie fixe du mécanisme permet l'obtention d'un mécanisme compact.

Dans un mode de réalisation particulièrement avantageux de l'invention, ladite articulation comprend un axe d'articulation pivoté librement dans la seconde extrémité de la bielle ; cet axe d'articulation comportant un perçage qui lui est perpendiculaire dans lequel tourne et coulisse le bras, ledit bras étant prévu suffisamment long pour ne pas sortir de l'axe d'articulation lors du fonctionnement du mécanisme. Cet axe d'articulation est, de préférence, perpendiculaire à la goupille. Dans un autre mode de réalisation particulièrement avantageux de l'invention, ladite articulation comprend une boule formant une rotule en libre rotation dans un logement de la seconde extrémité de la bielle, cette boule comportant un perçage diamétral dans lequel coulisse le bras, ledit bras étant prévu suffisamment long pour ne pas sortir de la boule lors du fonctionnement du mécanisme.

Selon une forme d'exécution préférée, l'arbre ne s'étend pas dans une direction perpendiculaire au cadran, c'est-à-dire que l'arbre ne s'étend pas dans une direction perpendiculaire au plan du mouvement horloger. De préférence, l'arbre est perpendiculaire à l'axe de rotation dudit pignon entraîneur et il s'étend dans un plan parallèle au cadran.

De manière préférée, le moyeu comprend une languette correspondant à la partie mobile de l'animation ou comprenant des moyens pour fixer un élément décoratif correspondant à la partie mobile de l'animation.

Avantageusement, le mécanisme de la pièce d'horlogerie selon l'invention comporte n pignons entraîneurs, n goupilles, n bielles, n bras, n articulations et n moyeux pivotés sur un arbre, « n » étant un nombre entier positif supérieur ou égal à 2. De préférence, les n pignons entraîneurs ont tous le même nombre de dents.

Lorsque n=2, la droite (D) passant par les axes de rotation desdits deux pignons entraîneurs est de préférence parallèle à l'arbre. Dans ce cas, les deux goupilles sont avantageusement positionnées de façon à intercepter ladite droite (D) simultanément et de sorte que, lors du fonctionnement du mécanisme, elles s'éloignent de cette droite (D) dans des sens opposés. Les deux languettes définissent ainsi un angle alpha variable dans le temps qui est alternativement maximum ou minimum lorsque les goupilles sont les plus éloignées possibles de cette droite (D).

Selon un mode de réalisation, le mécanisme de la pièce d'horlogerie selon l'invention comporte un barillet dont la cage est reliée cinématiquement avec le ou les pignons entraîneurs. De préférence, ledit mécanisme comprend un mobile d'entraînement comprenant une première roue engrenant avec le ou les pignons entraîneurs et un pignon relié cinématiquement avec la cage du barillet.

Lorsque n est supérieur à 1, les n pignons entraîneurs peuvent également engrener directement les uns avec les autres, les n pignons étant reliés cinématiquement à la cage du barillet.

Avantageusement, le mécanisme de la pièce d'horlogerie selon l'invention comporte un régulateur de vitesse relié cinématiquement avec le ou les pignons entraîneurs. De préférence, ledit mécanisme comprend un régulateur de vitesse et un mobile d'entraînement tel que décrit précédemment, ce mobile d'entraînement comportant une seconde roue reliée cinématiquement avec ledit régulateur de vitesse.

La pièce d'horlogerie selon l'invention est typiquement une montre-bracelet ou une montre de poche.

L'entraînement de l'animation peut avoir lieu à la demande ou à des moments prédéterminés.

Le mécanisme de la pièce d'horlogerie selon l'invention a une vitesse variant de manière sinusoïdale, ce qui limite les effets d'accélération de l'animation. Un tel mécanisme présente également l'avantage de permettre des mouvements de grande amplitude de la partie mobile de l'animation.

D'autres caractéristiques et avantages de la présente invention apparaîtront à la lecture de la description détaillée suivante faite en référence aux dessins annexés dans lesquels :
- La figure 1 est une vue partielle en perspective d'un mécanisme d'une pièce d'horlogerie selon un premier mode de réalisation de l'invention.
- La figure 2 est une vue de dessus du mécanisme représenté à la figure 1 comprenant un barillet et un régulateur de vitesse.
- La figure 3 est une vue en perspective d'une partie du mécanisme représenté à la figure 1.
- La figure 4a est une vue partielle en perspective d'un mécanisme d'une pièce d'horlogerie selon un second mode de réalisation de l'invention.
- La figure 4b est une coupe longitudinale d'une partie du mécanisme représenté dans la figure 4a.
- Les figures 5a et 5b sont des vues en perspective d'un moyeu pour un mécanisme d'une pièce d'horlogerie selon l'invention selon deux variantes.
- Les figures 6a à 6d représentent les angles, et en particulier les angles αₘᵢₙ et αₘₐₓ, définis par les parties mobiles d'une animation dans le mode de réalisation représenté dans la figure 1.

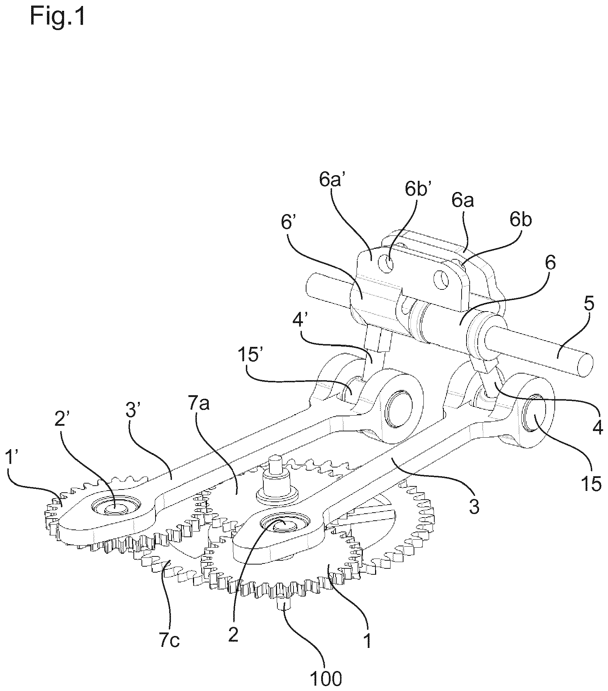

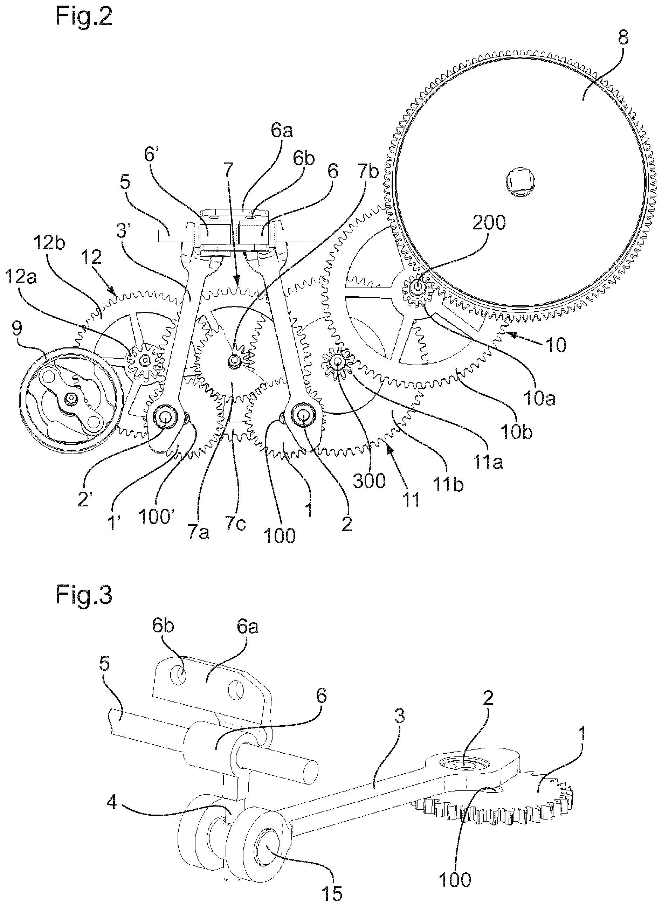

En référence aux figures 1 à 3, un mécanisme de transformation d'un mouvement rotatif unidirectionnel en un mouvement alterné d'une pièce d'horlogerie selon un premier mode de réalisation de l'invention comporte un pignon entraîneur 1 apte à être entraîné en rotation unidirectionnelle par un moteur du mouvement horloger tel qu'un barillet 8. Cet entraînement peut avoir lieu, par exemple, à la demande ou à des moments prédéterminés. Le pignon entraîneur 1 porte une goupille 2, excentrée par rapport à l'axe de rotation 100 du pignon entraîneur 1 et parallèle à cet axe 100, autour de laquelle pivote une première extrémité d'une bielle 3, le pignon entraîneur 1 et sa goupille 2 constituent donc une manivelle d'entraînement de la bielle 3. Selon l'invention, la seconde extrémité de la bielle 3 entraîne une partie mobile de l'animation.

Selon la forme d'exécution privilégiée de l'invention illustrée dans les dessins, le mouvement alterné est un mouvement alterné angulaire ou rotatif autour d'un axe ou arbre 5. Selon cette forme d'exécution, la seconde extrémité de la bielle 3 est articulée sur un bras 4 solidaire d'un moyeu 6 pivoté sur l'arbre 5, le moyeu 6 étant apte à porter la partie mobile de l'animation. Le pignon entraîneur 1 est pivoté sur une partie fixe du mécanisme, par exemple sur la platine ou sur un pont, et l'arbre 5 sur lequel est pivoté le moyeu 6 est solidaire d'une partie fixe du mécanisme, par exemple de la platine ou d'un pont.

Dans ce premier mode de réalisation de l'invention, l'articulation entre la seconde extrémité de la bielle 3 et le bras 4 comprend un axe d'articulation 15 pivoté librement dans la seconde extrémité de la bielle 3, cet axe d'articulation 15 comportant un perçage qui lui est perpendiculaire dans lequel tourne et coulisse le bras 4. De préférence, l'axe d'articulation 15 est perpendiculaire à la goupille 2. Le bras 4 est prévu suffisamment long pour ne pas sortir de l'axe d'articulation 15 lors du fonctionnement du mécanisme. La seconde extrémité de la bielle 3 dans laquelle est pivoté l'axe d'articulation 15 se termine par exemple par une fourche à deux bras, ledit axe d'articulation 15 étant pivoté par chacune de ses extrémités dans l'un des deux bras de ladite fourche. Le perçage dans lequel coulisse le bras 4 se trouve entre lesdits deux bras, lesquels ne gênent pas le coulissage du bras 4 dans le perçage, comme illustré dans la figure 1.

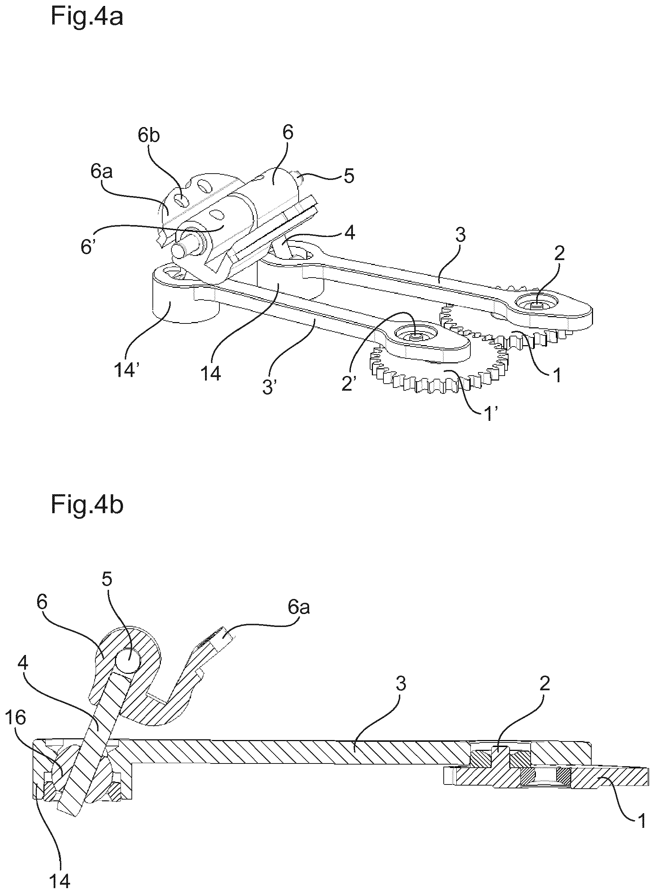

Les figures 4a et 4b illustrent un mécanisme de transformation d'un mouvement rotatif unidirectionnel en un mouvement angulaire alterné d'une pièce d'horlogerie selon un second mode de réalisation de l'invention. Une telle pièce d'horlogerie diffère de la pièce d'horlogerie selon le premier mode de réalisation de l'invention uniquement en ce que l'articulation de son mécanisme de transformation d'un mouvement rotatif unidirectionnel en un mouvement angulaire alterné comprend une boule 16 formant une rotule en libre rotation dans un logement 14 de la seconde extrémité de la bielle 3, cette boule 16 comportant un perçage diamétral dans lequel coulisse le bras 4. Le bras 4 est prévu suffisamment long pour ne pas sortir de la boule 16 lors du fonctionnement du mécanisme.

Les caractéristiques auxquelles il est fait référence dans la suite de la description sont applicables quel que soit le mode de réalisation de l'invention mis en œuvre.

L'arbre 5 est de préférence perpendiculaire à l'axe de rotation 100 dudit pignon entraîneur 1.

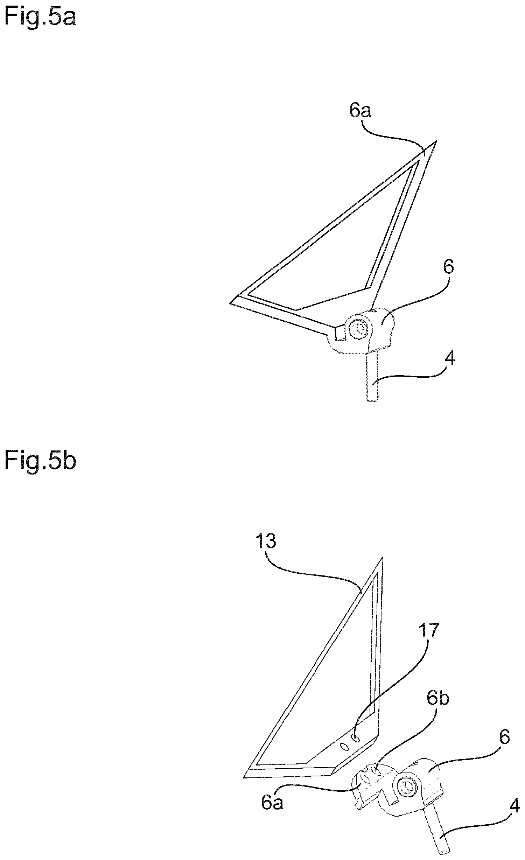

Comme illustré aux figures 5a et 5b, le moyeu 6 est solidaire d'une languette 6a. Cette languette 6a correspond à une partie mobile de l'animation (figure 5a) ou comprend des moyens de fixation 6b, tels que des trous ou des encoches, pour fixer un élément décoratif 13 correspondant à une partie mobile de l'animation (figure 5b). L'élément décoratif 13 peut également comporter des moyens de fixation 17 prévus pour coopérer, le cas échéant, avec les moyens de fixation 6b de la languette 6a.

L'avantage d'une languette 6a présentant des points de fixations 6b pour fixer un élément décoratif 13 est qu'elle permet de modifier facilement le motif de l'animation afin de l'adapter aux envies de l'utilisateur.

Dans le cadre de la présente invention, l'expression « partie mobile de l'animation » désigne, le cas échéant, soit la languette 6a ayant la forme d'un élément décoratif, soit la languette 6a et l'élément décoratif 13 qu'elle fixe. La partie mobile de l'animation définit un mouvement de battement alterné, en particulier alterné et intermittent, les parties mobiles de l'animation s'arrêtant généralement à chaque fois qu'elles définissent entre elles un angle αₘᵢₙ ou αₘₐₓ.

Le mécanisme de la pièce d'horlogerie selon l'invention comprend de préférence un régulateur de vitesse 9, relié cinématiquement avec le pignon entraîneur 1.

Le mécanisme de la pièce d'horlogerie selon l'invention comprend en plus un barillet 8 dont la cage est reliée cinématiquement avec le pignon entraîneur 1 de façon à entraîner ce dernier en rotation. Selon une variante de l'invention, le barillet 8 peut correspondre au barillet entrainant le rouage de finissage du mouvement horloger, mais dans une autre variante il peut être un barillet spécialement dédié au mécanisme d'animation.

Avantageusement, le mécanisme de la pièce d'horlogerie selon l'invention comprend en outre un mobile d'entraînement 7, comprenant une première roue 7a engrenant avec le pignon entraîneur 1 et un pignon 7b relié cinématiquement avec la cage du barillet 8. De préférence, la denture de la cage du barillet 8 engrène avec un pignon 10a d'un premier mobile 10 pivotant autour d'un axe 200 lequel porte également une roue 10b engrenant avec un pignon 11a pivotant autour d'un axe 300 d'un second mobile 11. Ce second mobile 11 porte également une roue 11b qui engrène avec le pignon 7b du mobile d'entraînement 7 afin de l'entraîner en rotation.

De préférence, le mobile d'entraînement 7 comprend également une deuxième roue 7c reliée cinématiquement avec le régulateur de vitesse 9, par exemple par le biais d'un mobile 12 dont un pignon 12a engrène avec ladite deuxième roue 7c et dont une roue 12b engrène avec le régulateur de vitesse 9. Ledit régulateur de vitesse 9 peut, par exemple, être du type centrifuge.

Dans les modes de réalisation représentés à titre d'exemples dans les figures 1, 2, 4a et 6a à 6d, le mécanisme de la pièce d'horlogerie selon l'invention comprend deux pignons entraîneurs 1, 1', deux goupilles 2, 2', deux bielles 3, 3', deux bras 4, 4' , deux articulations et deux moyeux 6, 6' pivotés sur le même arbre 5. Dans ces figures, les références 1', 2', 3', 4', 6', 6'a, 6'b, 13', 14', 15', 16' et 17' correspondent respectivement aux doublons des éléments 1, 2, 3, 4, 6, 6a, 6b, 13, 14, 15, 16 et 17.

Dans ce cas, les deux pignons entraîneurs 1, 1' sont de préférence reliés cinématiquement à la cage du barillet 8 par le mobile d'entraînement 7 tel que décrit précédemment dans lequel la première roue 7a engrène avec les deux pignons entraîneurs 1, 1' et le pignon 7b est relié cinématiquement avec la cage du barillet 8, les deux pignons entraîneurs 1, 1' tournent alors dans le même sens. Il est également envisageable que les deux pignons entraîneurs 1, 1' engrènent l'un avec l'autre et que les deux pignons entraîneurs 1, 1' soient reliés cinématiquement à la cage du barillet 8, les deux pignons entraîneurs 1, 1' tournent alors dans des sens opposés.

Dans le cas d'un mécanisme comprenant deux pignons entraîneurs 1, 1' et un régulateur de vitesse 9, ce dernier est relié cinématiquement avec les deux pignons entraîneurs 1, 1'. Le mécanisme comprend par exemple un mobile d'entraînement 7 tel que décrit précédemment dans lequel la seconde roue 7c est reliée cinématiquement avec le régulateur de vitesse 9.

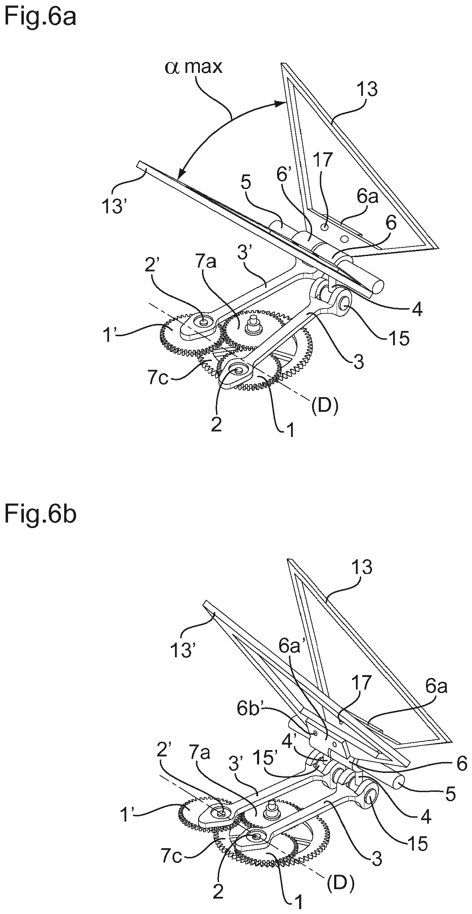

Avantageusement, les pignons entraîneurs 1, 1' sont positionnés de sorte que la droite (D) passant par les axes 100, 100' de rotation desdits deux pignons entraîneurs 1, 1' est parallèle à l'arbre 5, comme illustré dans les figures 6a à 6d.

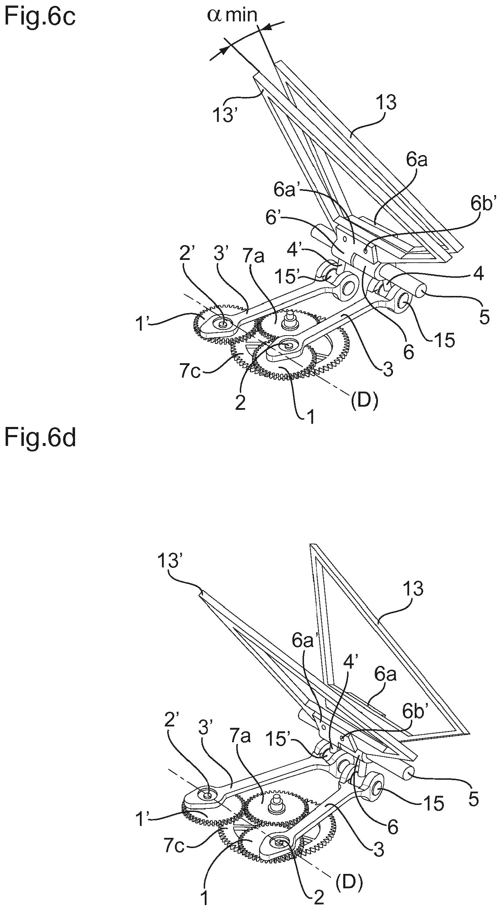

Les deux pignons entraîneurs 1, 1' ont de préférence le même nombre de dents et les goupilles 2, 2' qu'ils portent sont avantageusement positionnées de sorte à intercepter simultanément la droite (D) passant par les axes de rotation 100, 100' desdits deux pignons entraîneurs 1, 1', comme représenté dans les figures 6b et 6d. De plus, les goupilles 2, 2' sont, de préférence, positionnées en opposition, c'est à dire de façon à ce qu'elles s'éloignent de cette droite (D) dans des sens opposés lors du fonctionnement du mécanisme, lorsque les deux pignons entraîneurs 1, 1' tournent dans des sens opposés, comme illustré dans les figures 6a et 6c. De cette façon, les parties mobiles de l'animation définissent un angle α qui est alternativement maximum (αₘₐₓ) ou minimum (αₘᵢₙ) lorsque les goupilles sont les plus éloignées possibles de la droite (D), comme représenté dans les figures 6a à 6d. Un tel passage de la position « ouverte » à la position « ouverte » suivante correspond à deux battements des parties mobiles de l'animation.

Avantageusement, les goupilles 2, 2' sont placées à une même distance d des axes de rotation respectifs 100, 100' des pignons entraîneurs 1, 1' qui les portent. Ainsi les parties mobiles de l'animation se déplacent symétriquement.

Les parties mobiles de l'animation portées par les moyeux 6, 6' peuvent être de forme quelconque. Elles sont avantageusement constituées par des ailes d'oiseau ou d'insecte ou par des parties d'une fleur que le mécanisme selon l'invention peut respectivement faire battre ou s'ouvrir puis se fermer. Dans le cas particulier illustré aux figures 6a à 6d, les deux parties mobiles de l'animation ont la forme d'ailes schématiques d'oiseau placées en opposition qui se rapprochent et s'écartent périodiquement et symétriquement.

Dans le cas représenté sur les figures 6a à 6d, un tour complet des goupilles 2, 2' autour des axes de rotation 100, 100' des pignons entraîneurs 1, 1' qui les portent correspond en particulier à la réalisation de deux battements des parties mobiles de l'animation. Dans la figure 6a, les parties mobiles de l'animation sont représentées dans une position de départ « ouverte » avec un angle αₘₐₓ entre les deux parties mobiles de l'animation. Ces parties mobiles se rapprochent ensuite (figure 6b) jusqu'à former un angle αₘᵢₙ correspondant à une position « fermée », comme illustré dans la figure 6c. Enfin, les parties mobiles de l'animation s'écartent (figure 6d) pour revenir dans leur position ouverte de départ (figure 6a).

Le mouvement de l'animation est intermittent dans la mesure où les parties mobiles de l'animation s'arrêtent généralement à chaque fois qu'elles définissent entre elles un angle αₘᵢₙ ou αₘₐₓ. Le mouvement de battement de l'animation s'arrête également lorsqu'il s'agit d'un mouvement prédéterminé, au moment d'arrêt prédéterminé et lorsqu'il s'agit d'un mouvement à la demande, lorsque l'utilisateur le souhaite.

Il apparaîtra clairement à l'homme du métier que la présente invention n'est en aucun cas limitée aux modes de réalisation représentés dans les figures 1 à 6. Par exemple, selon une autre forme d'exécution, le mouvement alterné de la partie mobile de l'animation, qui est engendré par la ou les bielles 3, peut être un mouvement de translation dans un plan, par exemple dans un plan parallèle au cadran de la pièce d'horlogerie. Dans ce cas, la partie mobile de l'animation peut être solidaire d'une tige qui est solidaire de la seconde extrémité de la bielle 3. Une telle tige peut être, par exemple, parallèle à l'axe 100 du pignon 1.

En outre, il est par exemple très bien envisageable de réaliser une pièce d'horlogerie selon l'invention dont le mécanisme comprend, entre autres, plus de deux pignons entraîneurs 1, 1', plus de deux goupilles 2, 2', plus de deux bielles 3, 3', plus de deux bras 4, 4', plus de deux articulations et plus de deux moyeux 6, 6' pivotés sur le même arbre ou sur des arbres différents .

Quel que soit le nombre de pignons entraîneurs 1, 1', goupilles 2, 2', bielles 3, 3', bras 4, 4', moyeux 6, 6' et articulations utilisés, chacune des parties mobiles de l'animation se déplace à une vitesse variant de manière sinusoïdale, ce qui limite considérablement les effets d'accélération de l'animation et les mouvements saccadés qui pourraient en découler.

De plus, la pièce d'horlogerie selon l'invention comprend un mécanisme garantissant le maintien des parties mobiles de l'animation dans toutes les positions sans moyen de rappel supplémentaire, en particulier sans ressort.

L'amplitude des mouvements de la ou des parties mobiles de l'animation peut également être ajustée, notamment par le choix de la taille du ou des pignons entraîneurs 1, 1' et par le choix du positionnement de la ou des goupilles 2, 2' excentrées sur le ou les pignons entraîneurs 1, 1'.

## Revendications

1. Pièce d'horlogerie comprenant
- un mouvement horloger comportant une animation comprenant une partie mobile ;
- un moteur (8) dudit mouvement horloger ; et
- un mécanisme de transformation d'un mouvement rotatif unidirectionnel en un mouvement alterné pour l'entraînement de ladite partie mobile
ledit mécanisme comportant une manivelle (1, 2) comportant un pignon entraîneur (1) pivoté sur une partie fixe du mécanisme et entraîné en rotation unidirectionnelle par ledit moteur, et une goupille (2) portée par ledit pignon entraîneur (1), excentrée par rapport à son axe de rotation (100) et parallèle à cet axe (100), ladite goupille (2) entraînant une première extrémité d'une bielle (3) pivotant autour d'elle, la seconde extrémité de cette bielle (3) entraînant ladite partie mobile.

2. Pièce d'horlogerie selon la revendication 1, **caractérisée en ce que** le mouvement alterné est un mouvement de translation dans un plan.

3. Pièce d'horlogerie selon la revendication 1, **caractérisée en ce que** le mouvement alterné est un mouvement angulaire autour d'un arbre (5) solidaire d'une partie fixe du mécanisme.

4. Pièce d'horlogerie selon la revendication 3, **caractérisée en ce que** l'arbre (5) ne s'étend pas dans une direction perpendiculaire au plan du mouvement horloger.

5. Pièce d'horlogerie selon l'une des revendications 3 ou 4, **caractérisée en ce que** la seconde extrémité de la bielle (3) est articulée sur un bras (4) solidaire d'un moyeu (6) pivoté sur l'arbre (5) par une articulation, le moyeu (6) portant ladite partie mobile de l'animation.

6. Pièce d'horlogerie selon la revendication 5, **caractérisée en ce que** ladite articulation comprend un axe d'articulation (15) pivoté librement dans la seconde extrémité de la bielle (3) ; cet axe (15) comportant un perçage qui lui est perpendiculaire dans lequel tourne et coulisse le bras (4), ledit bras (4) étant prévu suffisamment long pour ne pas sortir de l'axe d'articulation (15) lors du fonctionnement du mécanisme.

7. Pièce d'horlogerie selon la revendication 6, **caractérisée en ce que** ledit axe d'articulation (15) est perpendiculaire à la goupille (2).

8. Pièce d'horlogerie selon la revendication 5, **caractérisée en ce que** ladite articulation comprend une boule (16) formant une rotule en libre rotation dans un logement (14) de la seconde extrémité de la bielle (3), cette boule (16) comportant un perçage diamétral dans lequel coulisse le bras (4), ledit bras 4 étant prévu suffisamment long pour ne pas sortir de la boule 16 lors du fonctionnement du mécanisme.

9. Pièce d'horlogerie selon l'une des revendications 3 à 8, **caractérisée en ce que** l'arbre (5) est perpendiculaire à l'axe de rotation (100) dudit pignon entraîneur (1).

10. Pièce d'horlogerie selon l'une des revendications 5 à 9, **caractérisée en ce que** le moyeu (6) comprend une languette (6a) correspondant à la partie mobile de l'animation ou comprenant des moyens (6b) pour fixer un élément décoratif (13) correspondant à ladite partie mobile de l'animation.

11. Pièce d'horlogerie selon l'une des revendications 5 à 10, **caractérisée en ce que** ledit mécanisme comporte n pignons entraîneurs (1, 1'), n goupilles (2, 2'), n bielles (3, 3'), n bras (4, 4'), n articulations et n moyeux (6, 6') articulés sur ledit arbre (5), « n » étant un nombre entier positif supérieur ou égal à deux.

12. Pièce d'horlogerie selon la revendication 11, **caractérisée en ce que** les n pignons entraîneurs (1, 1') ont tous le même nombre de dents.

13. Pièce d'horlogerie selon l'une des revendications 11 ou 12, **caractérisée en ce que** n=2.

14. Pièce d'horlogerie selon la revendication 13, **caractérisée en ce que** la droite (D) passant par les axes (100, 100') de rotation desdits deux pignons entraîneurs (1, 1') est parallèle à l'arbre (5).

15. Pièce d'horlogerie selon la revendication 14, **caractérisée en ce que**, lesdites deux goupilles (2, 2') sont positionnées de façon à intercepter ladite droite (D) simultanément et de sorte que, lors du fonctionnement du mécanisme, elles s'éloignent de cette droite (D) dans des sens opposés.

16. Pièce d'horlogerie selon l'une des revendications 11 à 15, **caractérisée en ce que** ledit mécanisme comporte un barillet (8) dont la cage est reliée cinématiquement avec le ou les pignons entraîneurs (1, 1').

17. Pièce d'horlogerie selon la revendication 16, **caractérisée en ce que** ledit mécanisme comprend un mobile d'entraînement (7) comprenant une première roue (7a) engrenant avec le ou les pignons entraîneurs (1, 1') et un pignon (7b) relié cinématiquement avec la cage du barillet (8).

18. Pièce d'horlogerie selon l'une des revendications 11 à 17, **caractérisé en ce que** ledit mécanisme comporte un régulateur de vitesse (9) relié cinématiquement avec le ou les pignons entraîneurs (1, 1').

## Patentansprüche

1. Uhr, die umfasst:
- ein Uhrwerk, das eine Animation umfasst, die einen beweglichen Teil umfasst;
- einen Motor (8) des Uhrwerks; und
- einen Mechanismus zur Umwandlung einer unidirektionalen Drehbewegung in eine abwechselnde Bewegung für den Antrieb des beweglichen Teils,
wobei der Mechanismus eine Kurbel (1, 2) umfasst, die ein Antriebsritzel (1), das sich auf einem festen Teil des Mechanismus dreht und durch den Motor unidirektional drehbar angetrieben wird, und einen Sperrstift (2) umfasst, der von dem Antriebsritzel (1) getragen wird, in Bezug auf seine Drehachse (100) exzentrisch und parallel zu dieser Achse (100) ist, wobei der Sperrstift (2) ein erstes Ende einer Kurbelstange (3) antreibt, die um ihn schwenkt, wobei das zweite Ende dieser Kurbelstange (3) den beweglichen Teil antreibt.

2. Uhr nach Anspruch 1, **dadurch gekennzeichnet, dass** die abwechselnde Bewegung eine Translationsbewegung in einer Ebene ist.

3. Uhr nach Anspruch 1, **dadurch gekennzeichnet, dass** die abwechselnde Bewegung eine Winkelbewegung um eine Welle (5) ist, die fest mit einem festen Teil des Mechanismus verbunden ist.

4. Uhr nach Anspruch 3, **dadurch gekennzeichnet, dass** die Welle (5) sich nicht in eine Richtung senkrecht zur Ebene des Uhrwerks erstreckt.

5. Uhr nach einem der Ansprüche 3 oder 4, **dadurch gekennzeichnet, dass** das zweite Ende der Kurbelstange (3) an einem Arm (4) gelenkig gelagert ist, der fest mit einer Nabe (6) verbunden ist, die durch ein Gelenk an der Welle (5) schwenkt, wobei die Nabe (6) den beweglichen Teil der Animation trägt.

6. Uhr nach Anspruch 5, **dadurch gekennzeichnet, dass** das Gelenk eine Gelenkachse (15) umfasst, die frei in dem zweiten Ende der Kurbelstange (3) schwenkt; wobei diese Achse (15) eine Bohrung umfasst, die senkrecht zu ihr ist und in der der Arm (4) sich dreht und gleitet, wobei der Arm (4) ausreichend lang vorgesehen ist, um die Gelenkachse (15) beim Betrieb des Mechanismus nicht zu verlassen.

7. Uhr nach Anspruch 6, **dadurch gekennzeichnet, dass** die Gelenkachse (15) senkrecht zu dem Sperrstift (2) ist.

8. Uhr nach Anspruch 5, **dadurch gekennzeichnet, dass** das Gelenk eine Kugel (16) umfasst, die ein Kugelgelenk bildet, das frei in einer Aufnahme (14) des zweiten Endes der Kurbelstange (3) drehbar ist, wobei diese Kugel (16) eine diametrale Bohrung umfasst, in der der Arm (4) gleitet, wobei der Arm (4) ausreichend lang vorgesehen ist, um die Kugel (16) während des Betriebs des Mechanismus nicht zu verlassen.

9. Uhr nach einem der Ansprüche 3 bis 8, **dadurch gekennzeichnet, dass** die Welle (5) senkrecht zur Drehachse (100) des Antriebsritzels (1) ist.

10. Uhr nach einem der Ansprüche 5 bis 9, **dadurch gekennzeichnet, dass** die Nabe (6) eine Zunge (6a) umfasst, die dem beweglichen Teil der Animation entspricht, oder Mittel (6b) zum Befestigen eines dekorativen Elements (13), das dem beweglichen Teil der Animation entspricht, umfasst.

11. Uhr nach einem der Ansprüche 5 bis 10, **dadurch gekennzeichnet, dass** der Mechanismus n Antriebsritzel (1, 1'), n Sperrstifte (2, 2'), n Kurbelstangen (3, 3'), n Arme (4, 4'), n Gelenke und n an der Welle (5) gelenkig gelagerte Naben (6, 6') umfasst, wobei "n" eine positive Ganzzahl größer oder gleich zwei ist.

12. Uhr nach Anspruch 11, **dadurch gekennzeichnet, dass** die n Antriebsritzel (1, 1') alle die gleiche Anzahl an Zähnen aufweisen.

13. Uhr nach einem der Ansprüche 11 oder 12, **dadurch gekennzeichnet, dass** n = 2.

14. Uhr nach Anspruch 13, **dadurch gekennzeichnet, dass** die Gerade (D), die durch die Drehachsen (100, 100') der zwei Antriebsritzel (1, 1') verläuft, parallel zu der Welle (5) ist.

15. Uhr nach Anspruch 14, **dadurch gekennzeichnet, dass** die zwei Sperrstifte (2, 2') derart positioniert sind, dass sie die Gerade (D) gleichzeitig und derart schneiden, dass sie sich beim Betrieb des Mechanismus in entgegengesetzten Richtungen von dieser Geraden (D) entfernen.

16. Uhr nach einem der Ansprüche 11 bis 15, **dadurch gekennzeichnet, dass** der Mechanismus ein Federhaus (8) umfasst, dessen Rohwerk kinematisch mit dem oder den Antriebsritzeln (1, 1') verbunden ist.

17. Uhr nach Anspruch 16, **dadurch gekennzeichnet, dass** der Mechanismus ein Antriebsdrehteil (7) umfasst, das ein erstes Rad (7a), das mit dem oder den Antriebsritzeln (1, 1') ineinandergreift, und ein Ritzel (7b) umfasst, das kinematisch mit dem Rohwerk des Federhauses (8) verbunden ist.

18. Uhr nach einem der Ansprüche 11 bis 17, **dadurch gekennzeichnet, dass** der Mechanismus einen Geschwindigkeitsregulator (9) umfasst, der kinematisch mit dem oder den Antriebsritzeln (1, 1') verbunden ist.

## Claims

1. Timepiece comprising
- a timepiece movement having an animation comprising a mobile part;
- a motor (8) of said timepiece movement; and
- a mechanism for converting a unidirectional rotational movement into an alternating movement for driving said mobile part
said mechanism having a crank (1, 2) having a driving pinion (1) pivoted on a fixed part of the mechanism and rotationally driven in one direction by said motor, and a pin (2) which is borne by said driving pinion (1), is eccentric with respect to its rotational spindle (100) and is in parallel with this spindle (100), said pin (2) driving a first end of a connecting rod (3) pivoting about same, the second end of this connecting rod (3) driving said mobile part.

2. Timepiece as claimed in claim 1, **characterised in that** the alternating movement is a translational movement in one plane.

3. Timepiece as claimed in claim 1, **characterised in that** the alternating movement is an angular movement about a shaft (5) fixedly attached to a fixed part of the mechanism.

4. Timepiece as claimed in claim 3, **characterised in that** the shaft (5) does not extend in a direction perpendicular to the plane of the timepiece movement.

5. Timepiece as claimed in any one of claims 3 or 4, **characterised in that** the second end of the connecting rod (3) is articulated on an arm (4) fixedly attached to a hub (6) pivoted on the shaft (5) by an articulation, the hub (6) bearing said mobile part of the animation.

6. Timepiece as claimed in claim 5, **characterised in that** said articulation comprises an articulation spindle (15) freely pivoted in the second end of the connecting rod (3); this spindle (15) having a bore which is perpendicular thereto and in which the arm (4) rotates and slides, said arm (4) being sufficiently long so as not to leave the articulation spindle (15) during operation of the mechanism.

7. Timepiece as claimed in claim 6, **characterised in that** said articulation spindle (15) is perpendicular to the pin (2).

8. Timepiece as claimed in claim 5, **characterised in that** said articulation comprises a ball (16) forming a ball joint which can rotate freely in a housing (14) of the second end of the connecting rod (3), this ball (16) having a diametric bore in which the arm (4) slides, said arm (4) being sufficiently long so as not to leave the ball (16) during operation of the mechanism.

9. Timepiece as claimed in any one of claims 3 to 8, **characterised in that** the shaft (5) is perpendicular to the rotational spindle (100) of said driving pinion (1).

10. Timepiece as claimed in any one of claims 5 to 9, **characterised in that** the hub (6) comprises a tab (6a) corresponding to the mobile part of the animation or comprising means (6b) for fixing a decorative element (13) corresponding to said mobile part of the animation.

11. Timepiece as claimed in any one of claims 5 to 10, **characterised in that** said mechanism has n driving pinions (1, 1'), n pins (2, 2'), n connecting rods (3, 3'), n arms (4, 4'), n articulations and n hubs (6, 6') articulated on said shaft (5), "n" being a positive integer greater than or equal to two.

12. Timepiece as claimed in claim 11, **characterised in that** the n driving pinions (1, 1') all have the same number of teeth.

13. Timepiece as claimed in any one of claims 11 or 12, **characterised in that** n = 2.

14. Timepiece as claimed in claim 13, **characterised in that** the straight line (D) passing through the rotational spindles (100, 100') of said two driving pinions (1, 1') is in parallel with the shaft (5).

15. Timepiece as claimed in claim 14, **characterised in that** said two pins (2, 2') are positioned so as to intersect said straight line (D) simultaneously and such that, during operation of the mechanism, they move away from this straight line (D) in opposite directions.

16. Timepiece as claimed in any one of claims 11 to 15, **characterised in that** said mechanism has a barrel (8), the cage of which is kinematically connected to the driving pinion(s) (1, 1').

17. Timepiece as claimed in claim 16, **characterised in that** said mechanism comprises a drive mobile (7) comprising a first wheel (7a) meshing with the driving pinion(s) (1, 1') and a pinion (7b) kinematically connected to the cage of the barrel (8).

18. Timepiece as claimed in any one of claims 11 to 17, **characterised in that** said mechanism has a speed regulator (9) kinematically connected to the driving pinion(s) (1, 1').
